# EUROPEAN PATENT SPECIFICATION

(11) **EP 3 051 190 B1**
(45) Date of publication and mention of the grant of the patent: **20.09.2017**
(21) Application number: 15176720.9
(22) Date of filing: 14.07.2015
(51) Int. Cl.: F16K 5/06, F16K 27/06

(54) **VALVE**
VENTIL
VANNE

(30) Priority: 02.02.2015 RU 2015103158 U
(43) Date of publication of application: 03.08.2016
(73) Proprietor: Levin, Dmitry Olegovich, 454091 Chelyabinsk city (RU)
(72) Inventor: Levin, Dmitry Olegovich, 454091 Chelyabinsk city (RU)
(74) Representative: Sutto, Luca

(56) References cited:
- DE-U1- 8 435 746
- FR-A1- 2 283 369
- GB-A- 413 046
- RU-U1- 139 790
- US-B1- 6 591 853

## Description

The invention relates to a valve, in particular a ball valve, for use in the field of pipeline fittings. The valve may be utilized in pipelines carrying natural gas, liquefied hydrocarbon gas, liquid petroleum products, water and other fluids. The invention also concerns a process of manufacturing the valve and a piping assembly including the valve.

A known ball valve (described in e.g., utility model RU No. 139790) comprises a body, flanges for connection to a pipeline, a ball, resilient gaskets, flanges connected to the body and made from bent thin rolled sheet metal, and resilient gaskets mounted in flange grooves. The main disadvantages of this valve are:
1) presence of an additional welded joint along the body,
2) presence of a threaded connection of flanges and body and, as a consequence, lower reliability due to the use of elements such as bolts and stud bolts which may loosen spontaneously due to the effect of pipeline vibrations,
3) mounting of seals in flange grooves, which involves the need for an additional grooving operation requiring manpower resources. Moreover, the presence of grooves reduces flange thickness and thus may compromise flange structural strength.

The selection of materials for proper manufacture of the valve body and operating elements is a limitation in the field of application of the above known valve.

Furthermore, it is known from DE 8435746 UI and FR 2283369 A1 a valve having a rotating occluder and flanges with respective fasteners. The object of the invention proposed is to create a ball valve having enhanced operational reliability.

A further object is providing a ball valve entailing reduced consumption of material for its manufacture.

An auxiliary object is providing a valve requiring less labor resources to be put in operation.

Thus the technical aim of the invention is enhancement of the operational reliability of the valve. An additional aim is reduction in the metal content and decrease in valve manufacturing costs.

### SUMMARY

One or more of the above objects and aims are substantially reached by a ball valve according to one or more of the appended claims.

Aspects of the invention are delineated herein below.

In accordance with an aspect a ball valve comprises a body, flanges connected to the body, an occluder (for instance a ball shaped occluder), and seal rings defining seats for receiving the occluder; the flanges are connected to the body with the aid of connecting elements for example in the form of tubes by properly inserting the connecting elements through holes practised on the flanges and by deforming terminal portions of the connecting elements creating terminal flanging expanded portions on said connecting elements.

Connecting the flanges to the body with the aid of connecting elements, e.g. in the form of tubes, by flanging the latter makes it possible to avoid forming - between flanges and the valve body - welded joints. Also use of fasteners (bolts, stud bolts) are avoided, which may loosen spontaneously due to the effect of pipeline vibrations, this significantly enhancing the operational reliability of the valve.

Furthermore, connecting the flanges to the body with the aid of connecting elements in the form of tubes, by flanging the latter (meaning by forming expanded terminal portions of the connecting elements or tubes in the form of flanges) reduces the amount of work and increases valve assembly rate, since it does not require energy-intensive welding equipment and technical processes associated with quality control of welded joints (flaw detection), or staff to assemble threaded joints. Also, the reduction in the number of parts leads to decrease in the metal for the manufacture of the valve.

### BRIEF DESCRIPTION OF THE DRAWINGS

Aspect of the invention are disclosed in the appended drawings which show a nonlimiting embodiment of the present invention, wherein:

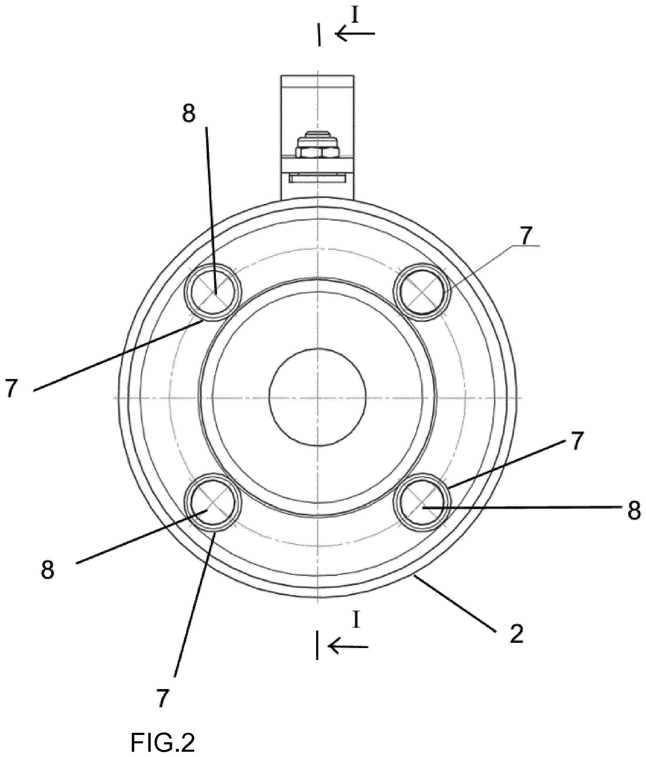

- Fig. 1 shows a partially interrupted cross-section of a ball valve, according to aspects of the invention; note that the cross section is made along plane I-I of figure 2, with the exclusion of a portion of fig. 1 showing the cross section of the valve at one of the connecting tubes 7.
- Fig. 2 shows a front view of the ball valve of fig. 1;
- Fig. 3 shows the ball valve of fig. 1 connected to a pipeline; fig. 3 is a side view,
with a partial longitudinal section in correspondence of one of the connecting tubes 7.

### DETAILED DESCRIPTION OF ONE OR MORE EXEMPLIFYING EMBODIMENTS

With reference to the appended drawings, a valve 100 is shown.

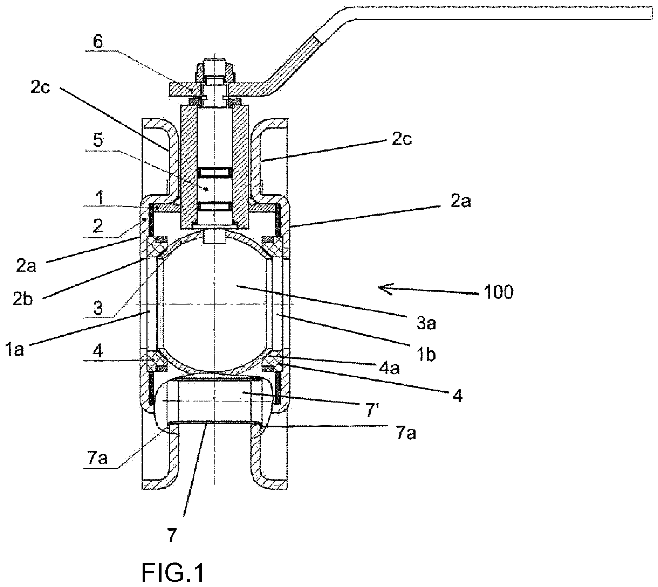

The valve 100 may be a ball valve i.e., a valve hosting a ball shaped or spherical occluder 3 as further described herein below. Note, however, that the ball shape of the occluder 3 is not necessitated and that the occluder 3 may take a different shape as long as it is able to rotate, relative to the valve body 1, between at least a closed position, where it interdicts fluid passage, and an open position (e.g. shown in figure 1), where it allows fluid to pass through the valve body: for instance the occluder may be in the shape of a cylinder or of an ovoid or another solid of revolution and should present a rotation axis coincident with its axis of symmetry and of revolution.

Going in further detail, the valve 100 comprises valve body 1, inlet and outlet flanges 2, and occluder (e.g. in the form of ball plug) 3, which as explained above is angularly displaceable between at least the open and the closed position: in this respect the occluder 3 defines an axial through channel 3a which - when the occluder is in the open position - is aligned with the inlet and outlet apertures 1a and 1b of the valve body 1.

Inside the valve body 1 or in correspondence of the valve body inlet and outlet apertures 1a, 1b, the valve 100 may include respective sealing rings 4 defining seal seats 4a receiving the occluder surface.

A stem 5 is connected to the occluder 3: the stem 5 passes through the valve body 1 and is terminally connected with operating handle 6.

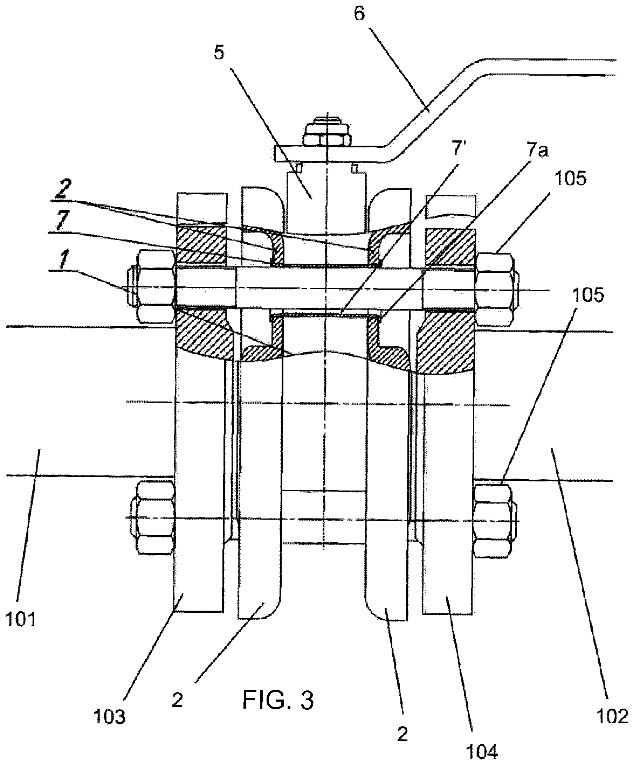

The valve 100 also includes opposite flanges 2: each of flanges 2 is coupled to the valve body at one respective of said inlet or outlet aperture 1a, 1b, as shown in figure 1. In greater detail, each flange 2 is provided with a number of through holes 8. Body 1 is connected to flanges 2 by connecting elements 7, which are configured to provide a reliable non-detachable connection: in practice each connecting element 7 has a connecting body which passes through a respective of said through holes 8 in one flange and through a respective and axially aligned through hole 8 in the opposite flange, as shown in figures 1 and 3; the connecting element 7 shall leave an axial passage 7' (see figure 3) open between the through holes and is therefore preferably designed in the form of a tubular connecting element. Each connecting element 7 also presents a terminal collar 7a which is radially larger than the radial dimension of the through holes in each flange such that each connecting element 7 axially blocks the two flanges 2 relative to the valve body 1.

Note that the flanges 2 may have a varying number of through holes for receiving a respective number of connecting elements: for instance figure 7 shows the case where each flange 2 has four through holes 8 for receiving 4 (four) corresponding connecting elements 7. It is however not excluded that the through holes 8 and corresponding connecting elements 7 may be 8, 12, 16 or 20, depending on the size of the valve.

As to the connecting elements 7 they may be made in any suitable material: for instance they may be in metal and the collars 7a may be obtained by mechanically deforming the terminal portions of each connecting element during the assembling process of the valve.

As already mentioned, the connecting elements 7 are preferably tubular and thus form connecting tubes with radially expanded ends defining said collars 7a. The connecting elements may alternatively be in the form of bushes or a sleeves or rolled sections of thin material or take any other shape suitable to define opposite collars 7a and create an axial connection between the two opposite flanges 2 while leaving a passage open for insertion of a fastener as further described herein below. Note that one of the collars may be pre-formed (for example in case one uses pre formed tubular rivets as connecting elements 7) while at least one of the collars 7a is formed during the manufacturing process of the valve 100.

Moving now to a more detailed description of the flanges 2, it should be noted that each flange is preferably of discoidal shape comprises a discoidal body with a central portion 2a delimiting a central aperture 2b and a peripheral portion 2c. The central portion 2a is generally flat and configured to match one of the front faces of the valve body, with the central aperture 2b is aligned with the inlet or outlet aperture of the valve body 1. The peripheral portion 2c of each flange (see figure 1) extends radially outside the central portion 2a and presents said through holes 8; in greater detail, the peripheral portion has a first zone extending transverse to the central portion 2a, a second zone extending transverse to the first zone and parallel to the central portion of the flange (the holes 8 are located in correspondence of the second zone of each flange peripheral portion) and optionally a third zone representing the external border of the flange emerging transversally with respect to the second zone. In one aspect - as shown in figure 1, the peripheral portion of each flange presents in cross section a U-shaped conformation.

Flanges 2 may be made in any suitable manner: for instance they may be obtained from a foil or a plate or a sheet or a web of metal such as for example from rolled sheet stock. Flanges may be obtained by mechanical deformation: for instance flanges may be stamped from said foil or sheet or plate or web of metal and then the through holes and the central aperture formed or the final flange may be directly obtained by combined stamping and punching from a foil or a plate or a sheet or a web of metal. The rigidity and strength of flanges 2 are provided by the first and optional third zone of the flange which define stiffening ribs or by forming stiffening ribs on the flange during manufacture.

### MANUFACTURING PROCESS

The manufacturing process of a valve 100 according to aspects of the invention is as follows. The below described process applies to the valve 100 described above and to a valve as per one or more of the appended claims.

The process comprises preparing the valve body 1 in proper position, inserting the occluder 3 inside the valve body and placing in the appropriate position the annular elements 4. The stem 5 may be angularly fixed to the occluder either at this stage or after, e.g. after coupling the flanges 2 to the valve body.

The two flanges 2 (which we may refer to as inlet and outlet flanges 2) are then associated to the respective sides of the valve body in correspondence of inlet and outlet apertures 1a and 1b. The connecting elements 7 are inserted into the through holes in the flanges and one or both the collars 7a formed in order to axially block the two flanges 2 against the valve body 1. Note that insertion of the connecting elements 7 and/or formation of the collars 7a may take place while keeping the connecting elements at a relatively high temperature in order to facilitate thermo forming of the collars and - additionally - achieve axial contraction of the connecting element once cooled back to ambient temperature. Depending upon the material used for the connecting element said high temperature may be higher than 100 °C, more optionally higher than 300 °C, even more optionally higher than 600 °C. Axial contraction promotes tight packing and reliable and strong assembly of the flanges with the valve body 1.

The faces of the valve flanges may roughened, either mechanically by means of abrasive tools or by mechanically working the surface (lathe, shot-blasting, sand blasting or other) or chemically, and form a very tight connection against the surface of the valve body or that of the sealing rings (as shown in figure 1).

Thanks to the design of valve 100 and in view of the above manufacturing process connecting body 1 to flanges 2 by flanging (i.e. by forming one or both the collars 7a) does not require energy-intensive welding equipment and technical processes associated with quality control of welded joints (for flaw detection). Also no staff is required for to assemble threaded joints. The body is connected to the flanges by deforming the connecting elements and thus clamping the flanges under pressure and simultaneously flanging the connecting elements or connecting tubes 7 mounted in the through holes present in the flanges.

The solution described above has several advantages: it has been found to ensure seal-tightness and to extend the use of gasket material (including rubber) at temperatures above zero.

The valve now proposed does not require welding the valve body to the flanges. As a consequence, the number of parts and amount of work are reduced, and the assembly rate for making the valve is increased. The absence of removable fasteners enhances the operational reliability. Furthermore, a valve which has the body and flanges shaped as described and connected with the aid of the described connecting elements, has a smaller axial length as compared to analogous valves, which allows it to be installed in a restricted space.

Valve parts which are in contact with the working fluid and the ambient environment are may subjected to protective anticorrosion treatment (using various methods, including galvanizing, painting, surface covering with protective layers). Introduction of anticorrosion treatment makes it possible to extend the field of application, and also to increase the service life and effective utilization of the valve.

### INSTALLATION and OPERATION

The valve 100 operates in the following manner.

The valve is secured in a pipeline system by means of stud bolts applied as shown in figure 3: basically the terminal flange 103 of a first pipe 101 is approached to the inlet flange 2 while the terminal flange 104 of a second pipe 102 is approached to the outlet flange 2 of the valve (this may evidently be accomplished by moving one or both the pipes 101, 102 or by properly inserting the valve 100 between the terminal flanges of the two tubes). Fasteners such as bolts 105 have respective stems which are inserted via the through holes 8 in each of the two flanges 2 of the valve 100 and through the corresponding openings 105, 106 in the pipes flanges 102, 104 passing all the way through the connecting elements 7. The bolts are then tightly fixed to block flanges 103, 104 against flanges 2: for example each of said bolts may have a male threaded portion designed to couple with a corresponding female threaded portion present on a respective nut coupled to the respective bolt stem applying an axial clamping force and thus forming a bolted joint.

The valve 100 serves to selectively open or shut off the flow of working fluid. This design solution allows the valve to be located in any spatial position, which facilitates installation. The valve is operated by turning the valve handle e.g. by 90° into the "open-closed" positions. In the "open" position, the through aperture of the plug coincides with the pipeline aperture and a stream of fluid flows through the pipeline. When the handle is turned to the "closed" position, the valve shuts off the stream of fluid.

## Claims

1. A valve (100) comprising:
- a valve body (1) having at least an inlet aperture (1a) and an outlet aperture (1b),
- an occluder (3) housed in the valve body (1) and presenting a through channel (3a), the occluder being configured to rotate, relative to the valve body (1), between at least a closed position, where it prevents fluid passage between said inlet aperture (1a) and said outlet aperture (1b), and an open position, where it allows fluid to pass from the inlet aperture to the outlet aperture through said channel (3a),
- opposite flanges (2) coupled to the valve body, wherein each flange is provided with a number of through holes (8),
- connecting elements (7) securing the flanges (2) to the valve body (1), wherein each connecting element (7) has a connecting body which passes through a respective of said through holes (8) in one flange 2 and through a respective and axially aligned through hole (8) in the opposite flange (2), each of said connecting elements (7) being configured to at least axially constrain the two flanges (2) relative to the valve body (1),
**characterized in that** each connecting element (7) also presents a terminal collar (7a) which is radially larger than the radial dimension of the through holes (8) in each flange such that each terminal collar may abut against a surface portion of each flange and axially block the two flanges (2) relative to the valve body (1).

2. A valve according to any one of the preceding claims wherein each connecting element (7) has a radially internal axial passage (7') extending between the opposite ends of the connecting element (7).

3. A valve according to any one of the preceding claims wherein each connecting element (7) presents a tubular shape.

4. A valve according to any one of the preceding claims wherein each collar (7a) is shaped as an annular flange.

5. A valve according to any one of the preceding claims wherein each one of flanges (2) has a plurality of angularly spaced through holes for receiving a respective identical number of connecting elements (7),
optionally wherein each flange (2) has at least three, preferably at least four, through holes for receiving corresponding connecting elements (7),
and wherein said through holes in each one of flanges (2) are uniformly angularly spaced and axially aligned with the corresponding holes in the other and opposite flange.

6. A valve according to any one of the preceding claims wherein each flange (2) has:
- a central portion (2a) delimiting a central aperture (2b), said central portion (2a) having a shape configured to match one of the front faces of the valve body with the central aperture (2b) aligned with one of the inlet or outlet aperture (1a, 1b) of the valve body (1), and
- a peripheral portion (2c) extending radially outside from the central portion (2a) and presenting said through holes (8).

7. A valve according to claim 6 wherein the peripheral portion (2c) of each flange has:
- a first zone extending transverse to the central portion (2a) and directed towards the opposite flange,
- a second zone extending transverse to the first zone, the second zone extending optionally parallel to the central portion of the flange, and
- an optional third zone representing the external border of the flange emerging transversally with respect to the second zone and directed apart from the opposite flange.
wherein the through holes in each flange are positioned in correspondence of the second zone of the peripheral portion.

8. A valve according to claim 7, wherein the peripheral portion of each flange has a third zone representing the external border of the flange emerging transversally with respect to the second zone, optionally parallel to the first zone, and directed apart from the opposite flange, the first, second and third zones being configured to confer to the cross section of the peripheral portion of each flange a U-shaped conformation.

9. A valve according to any one of the preceding claims, wherein the occluder (3) has the shape of a solid of revolution, said solid of revolution being one selected in the group comprising:
a sphere or ball,
a cylinder,
an ovoid,
wherein the occluder present a rotation axis relative to the valve body coincident with its axis of revolution;
and/or wherein the valve has a stem (5) connected to the occluder (3), wherein the stem (5) passes through the valve body (1) and is terminally connected with operating handle 6 for angularly driving the occluder between said open and closed positions.

10. Valve according to any one of the preceding claims wherein inside the valve body (1) or in correspondence of the valve body inlet and outlet apertures (1a, 1b), the valve (100) includes respective first and second sealing rings (4), axially spaced from one another and each defining a respective seal seat (4a) receiving the occluder surface, the first and second sealing rings (4) defining the axial position of the occluder (3) relative to the valve body (1).

11. A valve according to claim 10 wherein the respective first and second sealing rings (4) are located respectively at the valve body inlet and outlet apertures (1a, 1b), and wherein each one of the two opposite flanges (2) is coupled to the valve body at one respective of said inlet or outlet aperture (1a, 1b) and abuts against a front exposed surface of each sealing ring (4),
said flanges axially containing the valve body (1) and axially blocking said sealing rings (4) to the valve body (1).

12. A process of manufacturing a valve (100) according to any one of the preceding claims, the process including the following steps:
- preparing the valve body (1),
- positioning the occluder (3) inside the valve body (1),
- associating the two flanges (2) to respective axially opposite sides of the valve body in correspondence of said inlet and outlet apertures (1a and 1b),
- inserting connecting elements (7) into the through holes in the flanges (2),
- forming one or both the collars (7a) and axially blocking the two flanges (2) against the valve body (1).

13. A process according to claim 12, wherein one or both said collars (7a) in each connecting element are formed, by mechanical deformation of the connecting element terminal portions, after insertion of the connecting element (7) in the two corresponding through holes (8) of opposite flanges;
wherein insertion of the connecting elements (7) and/or formation of the collars (7a) takes place while keeping the connecting elements at a temperature higher than 100 °C, more optionally higher than 300 °C, even more optionally higher than 600 °C, and wherein after formation of one or both said collars, a step of cooling take place causing axial contraction of the connecting element.

14. A process according to any one of claims 12 or 13, wherein positioning the occluder (3) comprises:
- inserting the occluder (3) into the valve body (1), and
- locating respective first and second sealing rings (4) respectively at the valve body inlet and outlet apertures (1a, 1b),
wherein each one of the two opposite flanges (2) is coupled to the valve body at one respective of said inlet or outlet aperture (1a, 1b) and abuts against a front exposed surface of each sealing ring (4), said flanges axially containing the valve body (1) and axially blocking said sealing rings (4) to the valve body (1).

15. A piping assembly comprising:
- a first pipe (101) having a terminal flange (103) provided with a number of through openings,
- a second pipe (102) having terminal flange (104),
- a valve (100) according to any one of preceding claims from 1 to 11 or a valve manufactured using the process of any one of claims from 12 to 14, wherein the valve (100) is inserted between said first pipe terminal flange (103) and said second pipe terminal flange (104),
- fasteners (105) having respective stems inserted via the through holes in each of the two flanges (2) of the valve (100) and through corresponding openings (105, 106) in the pipes terminal flanges (102, 104), said fastener stems passing through the axial passages (7') of the connecting elements (7), said fasteners having tightening means to block flanges (103, 104) against flanges (2), optionally wherein each of said fasteners comprises a bolt having a male threaded portion designed to couple with a corresponding female threaded portion present on a respective nut coupled to the bolt stem.

## Patentansprüche

1. Ventil (100), umfassend:
- einen Ventilkörper (1), welcher wenigstens eine Einlassöffnung (1a) und eine Auslassöffnung (1b) aufweist,
- einen Okkluder (3), welcher in dem Ventilkörper (1) aufgenommen ist und einen Durchgangskanal (3a) darbietet, wobei der Okkluder dafür eingerichtet ist, sich in Bezug auf den Ventilkörper (1) zwischen wenigstens einer geschlossenen Position, in welcher er einen Fluiddurchgang zwischen der Einlassöffnung (1a) und der Auslassöffnung (1b) verhindert, und einer offenen Position zu drehen, in welcher er einem Fluid ermöglicht, von der Einlassöffnung durch den Kanal (3a) zu der Auslassöffnung durchzugehen,
- gegenüberliegende Flansche (2), welche mit dem Ventilkörper gekoppelt sind, wobei jeder Flansch mit einer Anzahl von Durchgangslöchern (8) bereitgestellt ist,
- Verbindungselemente (7), welche die Flansche (2) an dem Ventilkörper (1) sichern, wobei jedes Verbindungselement (7) einen Verbindungskörper aufweist, welcher durch ein entsprechendes der Durchgangslöcher (8) in einem Flansch (2) und durch ein entsprechendes und axial ausgerichtetes Durchgangsloch (8) in dem gegenüberliegenden Flansch (2) durchgeht, wobei jedes der Verbindungselemente (7) dafür eingerichtet ist, die zwei Flansche (2) in Bezug auf den Ventilkörper (1) wenigstens axial zu beschränken,
**dadurch gekennzeichnet, dass** jedes Verbindungselement (7) auch einen Endkragen (7a) darbietet, welcher radial größer als die radiale Abmessung der Durchgangslöcher (8) in jedem Flansch ist, sodass jeder Endkragen an einem Flächenabschnitt jedes Flansches anliegen und die zwei Flansche (2) in Bezug auf den Ventilkörper (1) axial blockieren kann.

2. Ventil nach einem der vorhergehenden Ansprüche, wobei jedes Verbindungselement (7) einen radial inneren, axialen Durchgang (7') aufweist, welcher sich zwischen den entgegengesetzten Enden des Verbindungselements (7) erstreckt.

3. Ventil nach einem der vorhergehenden Ansprüche, wobei jedes Verbindungselement (7) eine rohrförmige Form darbietet.

4. Ventil nach einem der vorhergehenden Ansprüche, wobei jeder Kragen (7a) als ein ringförmiger Flansch geformt ist.

5. Ventil nach einem der vorhergehenden Ansprüche, wobei jeder der Flansche (2) eine Mehrzahl winklig beabstandeter Durchgangslöcher zum Aufnehmen einer entsprechenden identischen Anzahl von Verbindungselementen (7) aufweist,
optional, wobei jeder Flansch (2) wenigstens drei, vorzugsweise wenigstens vier, Durchgangslöcher zum Aufnehmen entsprechender Verbindungselemente (7) aufweist,
und wobei die Durchgangslöcher in jedem der Flansche (2) gleichmäßig winklig beabstandet und axial mit den entsprechenden Löchern in dem anderen und gegenüberliegenden Flansch ausgerichtet sind.

6. Ventil nach einem der vorhergehenden Ansprüche, wobei jeder Flansch (2) aufweist:
- einen zentralen Abschnitt (2a), welcher eine zentrale Öffnung (2b) begrenzt, wobei der zentrale Abschnitt (2a) eine Form aufweist, welche dafür eingerichtet ist, mit der zentralen Öffnung (2b) zu einer der Einlass- oder der Auslassöffnung (1a, 1b) des Ventilkörpers (1) ausgerichtet, zu einer der Vorderflächen des Ventilkörpers zu passen, und
- einen Umfangsabschnitt (2c), welcher sich von dem zentralen Abschnitt (2a) radial nach außen erstreckt und die Durchgangslöcher (8) darbietet.

7. Ventil nach Anspruch 6, wobei der Umfangsabschnitt (2c) jedes Flansches aufweist:
- eine erste Zone, welche sich transversal zu dem zentralen Abschnitt (2a) erstreckt und in Richtung des gegenüberliegenden Flansches ausgerichtet ist,
- eine zweite Zone, welche sich transversal zu der ersten Zone erstreckt, wobei sich die zweite Zone optional parallel zu dem zentralen Abschnitt des Flansches erstreckt, und
- eine optionale dritte Zone, welche die äußere Grenze des Flansches darstellt, welche transversal in Bezug auf die zweite Zone herausragt und sich von dem gegenüberliegenden Flansch entfernend ausgerichtet ist, wobei die Durchgangslöcher in jedem Flansch in Übereinstimmung mit der zweiten Zone des Umfangsabschnitts positioniert sind.

8. Ventil nach Anspruch 7, wobei der Umfangsabschnitt jedes Flansches eine dritte Zone aufweist, welche die äußere Grenze des Flansches darstellt, welche, optional parallel zu der ersten Zone, transversal in Bezug auf die zweite Zone herausragt und sich von dem gegenüberliegenden Flansch entfernend ausgerichtet ist, wobei die erste, die zweite und die dritte Zone dafür eingerichtet sind, dem Querschnitt des Umfangsabschnitts jedes Flansches eine U-förmige Gestalt zu verleihen.

9. Ventil nach einem der vorhergehenden Ansprüche, wobei der Okkluder (3) die Form eines Rotationskörpers aufweist, wobei der Rotationskörper eines ist, ausgewählt aus der Gruppe, umfassend:
eine Kugel oder einen Ball,
einen Zylinder,
einen eiförmigen Körper,
wobei der Okkluder eine Drehachse in Bezug auf den Ventilkörper darbietet, welche koinzident mit dessen Rotationsachse ist;
und/oder wobei das Ventil einen Schaft (5) aufweist, welcher mit dem Okkluder (3) verbunden ist, wobei der Schaft (5) durch den Ventilkörper (1) durchgeht und endseitig mit einem Betätigungsgriff (6) zum winkligen Ansteuern des Okkluders zwischen der offenen und der geschlossenen Position verbunden ist.

10. Ventil nach einem der vorhergehenden Ansprüche, wobei das Ventil (100) innerhalb des Ventilkörpers (1) oder in Übereinstimmung mit der Ventilkörper-Einlass- und der Auslassöffnung (1a, 1b) einen jeweiligen ersten und zweiten Dichtring (4) umfasst, welche axial voneinander beabstandet sind und jeweils einen jeweiligen Dichtungssitz (4a) definieren, welcher die Okkluderfläche aufnimmt, wobei der erste und der zweite Dichtring (4) die axiale Position des Okkluders (3) in Bezug auf den Ventilkörper (1) definieren.

11. Ventil nach Anspruch 10, wobei der jeweilige erste und zweite Dichtring (4) an der Ventilkörper-Einlass- bzw. der Auslassöffnung (1a, 1b) angeordnet sind, und wobei jeder der zwei gegenüberliegenden Flansche (2) an einer jeweiligen der Einlass- oder der Auslassöffnung (1a, 1b) mit dem Ventilkörper gekoppelt ist und an einer exponierten Vorderfläche jedes Dichtrings (4) anliegt,
wobei die Flansche axial den Ventilkörper (1) enthalten und die Dichtringe (4) axial an dem Ventilkörper (1) blockieren.

12. Verfahren zur Herstellung eines Ventils (100) nach einem der vorhergehenden Ansprüche, wobei das Verfahren die folgenden Schritte umfasst:
- Bereitstellen des Ventilkörpers (1),
- Positionieren des Okkluders (3) innerhalb des Ventilkörpers (1),
- Zuordnen der zwei Flansche (2) zu jeweils axial entgegengesetzten Seiten des Ventilkörpers in Übereinstimmung mit der Einlass- und der Auslassöffnung (1a und 1b),
- Einfügen von Verbindungselementen (7) in die Durchgangslöcher in den Flanschen (2),
- Bilden des einen oder der beiden Kragen (7a) und axial Blockieren der zwei Flansche (2) an dem Ventilkörper (1).

13. Verfahren nach Anspruch 12, wobei der eine oder die beiden Kragen (7a) in jedem Verbindungselement durch eine mechanische Verformung der Verbindungselementendabschnitte nach einer Einfügung des Verbindungselements (7) in die zwei entsprechenden Durchgangslöcher (8) gegenüberliegender Flansche gebildet werden;
wobei die Einfügung der Verbindungselemente (7) und/oder eine Ausbildung der Kragen (7a) stattfinden, während die Verbindungselemente bei einer Temperatur von mehr als 100° C, optionaler von mehr als 300° C, noch optionaler von mehr als 600° C, gehalten werden, und wobei nach der Ausbildung des einen oder der beiden Kragen ein Schritt eines Kühlens stattfindet, welcher eine axiale Kontraktion des Verbindungselements bewirkt.

14. Verfahren nach einem der Ansprüche 12 oder 13, wobei ein Positionieren des Okkluders (3) umfasst:
- Einfügen des Okkluders (3) in den Ventilkörper (1), und
- Anordnen eines ersten bzw. eines zweiten Dichtrings (4) an der Ventilkörper-Einlass- bzw. Auslassöffnung (1a, 1b),
wobei jeder der gegenüberliegenden Flansche an einer jeweiligen der Einlass- oder der Auslassöffnung (1a, 1b) mit dem Ventilkörper gekoppelt wird und an einer exponierten Vorderfläche jedes Dichtrings (4) anliegt, wobei die Flansche axial den Ventilkörper (1) enthalten und die Dichtringe (4) axial an dem Ventilkörper (1) blockieren.

15. Leitungsanordnung, umfassend:
- eine erste Leitung (101), welche einen Endflansch (103) aufweist, welcher mit einer Anzahl von Durchgangsöffnungen bereitgestellt ist,
- eine zweite Leitung (102), welche einen Endflansch (104) aufweist,
- ein Ventil (100) nach einem der vorhergehenden Ansprüche 1 bis 11 oder ein unter Verwendung des Verfahrens nach einem der Ansprüche 12 bis 14 hergestelltes Ventil, wobei das Ventil (100) zwischen dem ersten Leitungsendflansch (103) und dem zweiten Leitungsendflansch (104) eingefügt ist,
- Befestigungsmittel (105), welche jeweilige Schäfte aufweisen, welche über die Durchgangslöcher in jedem der zwei Flansche (2) des Ventils (100) und durch entsprechende Öffnungen (105, 106) in den Leitungsendflanschen (102, 104) eingefügt sind, wobei die Befestigungsmittelschäfte durch die axialen Durchgänge (7') der Verbindungselemente (7) durchgehen, wobei die Befestigungsmittel Anziehmittel aufweisen, um die Flansche (103, 104) gegen die Flansche (2) zu blockieren, optional wobei jedes der Befestigungsmittel einen Bolzen umfasst, welcher einen männlichen Gewindeabschnitt aufweist, welcher zum Koppeln mit einem entsprechenden weiblichen Gewindeabschnitt ausgebildet ist, welcher auf einer entsprechenden mit dem Bolzenschaft gekoppelten Nuss vorhanden ist.

## Revendications

1. Vanne (100) comprenant :
- un corps de vanne (1) présentant au moins une ouverture d'entrée (1a) et une ouverture de sortie (1b),
- un obturateur (3) logé dans le corps de vanne (1) et présentant un canal traversant (3a), l'obturateur étant configuré pour tourner, par rapport au corps de vanne (1), entre au moins une position fermée, où il empêche le passage de liquide entre ladite ouverture d'entrée (1a) et ladite ouverture de sortie (1b), et une position ouverte, où il permet au liquide de passer depuis l'ouverture d'entrée vers l'ouverture de sortie à travers ledit canal (3a),
- des collerettes opposées (2) couplées au corps de vanne, où chaque collerette est prévue avec un nombre de trous traversants (8),
- des éléments de raccordement (7) fixant solidement les collerettes (2) au corps de vanne (1), où chaque élément de raccordement (7) présente un corps de raccordement qui passe à travers l'un respectif desdits trous traversants (8) dans une collerette 2 et à travers un trou traversant respectif et aligné de manière axiale (8) dans la collerette opposée (2), chacun desdits éléments de raccordement (7) étant configuré pour au moins contraindre axialement les deux collerettes (2) par rapport au corps de vanne (1),
**caractérisée en ce que** chaque élément de raccordement (7) présente également un collier terminal (7a) qui est radialement plus grand que la dimension radiale des trous traversants (8) dans chaque collerette de sorte que chaque collier terminal puisse venir en butée contre une partie de surface de chaque collerette et bloquer axialement les deux collerettes (2) par rapport au corps de vanne (1).

2. Vanne selon l'une quelconque des revendications précédentes dans laquelle chaque élément de raccordement (7) présente un passage axial radialement interne (7') s'étendant entre les extrémités opposées de l'élément de raccordement (7).

3. Vanne selon l'une quelconque des revendications précédentes dans laquelle chaque élément de raccordement (7) présente une forme tubulaire.

4. Vanne selon l'une quelconque des revendications précédentes dans laquelle chaque collier (7a) a la forme d'une collerette annulaire.

5. Vanne selon l'une quelconque des revendications précédentes dans laquelle chacune des collerettes (2) présente une pluralité de trous traversants espacés de manière angulaire pour recevoir un nombre respectif identique des éléments de raccordement (7),
éventuellement dans laquelle chaque collerette (2) présente au moins trois, préférablement au moins quatre, trous traversants pour recevoir les éléments de raccordement correspondants (7),
et où lesdits trous traversants dans chacune des collerettes (2) sont uniformément espacés de manière angulaire et axialement alignés avec les trous correspondants dans l'autre collerette opposée.

6. Vanne selon l'une quelconque des revendications précédentes dans laquelle chaque collerette (2) présente :
- une partie centrale (2a) délimitant une ouverture centrale (2b), ladite partie centrale (2a) présentant une forme configurée pour correspondre à l'une des faces avant du corps de vanne avec l'ouverture centrale (2b) alignée sur l'une de l'ouverture d'entrée ou de sortie (1a, 1b) du corps de vanne (1), et
- une partie périphérique (2c) s'étendant de manière radiale en dehors de la partie centrale (2a) et présentant lesdits trous traversants (8).

7. Vanne selon la revendication 6 dans laquelle la partie périphérique (2c) de chaque collerette présente :
- une première zone s'étendant de manière transversale par rapport à la partie centrale (2a) et dirigée vers la collerette opposée,
- une seconde zone s'étendant de manière transversale vers la première zone, la seconde zone s'étendant éventuellement de manière parallèle à la partie centrale de la collerette, et
- une troisième zone facultative représentant la bordure externe de la collerette qui émerge de manière transversale par rapport à la seconde zone et dirigée à l'écart de la collerette opposée,
où les trous traversants dans chaque collerette sont positionnés en correspondance de la seconde zone de la partie périphérique.

8. Vanne selon la revendication 7, dans laquelle la partie périphérique de chaque collerette présente une troisième zone représentant la bordure externe de la collerette émergeant de manière transversale par rapport à la seconde zone, éventuellement parallèle à la première zone, et dirigée à l'écart de la collerette opposée, la première, la seconde et la troisième zones étant configurées pour conférer à la section transversale de la partie périphérique de chaque collerette une conformation en forme de U.

9. Vanne selon l'une quelconque des revendications précédentes, dans laquelle l'obturateur (3) présente la forme d'un solide de révolution, ledit solide de révolution étant l'un sélectionné dans le groupe comprenant :
une sphère ou une bille,
un cylindre,
un ovoïde,
l'obturateur présentant un axe de rotation par rapport au corps de vanne qui coïncide avec son axe de révolution ;
et/ou la vanne présentant une tige (5) raccordée à l'obturateur (3), où la tige (5) passe à travers le corps de vanne (1) et est connectée au plan terminal avec la poignée de fonctionnement 6 pour conduire de manière angulaire l'obturateur entre lesdites positions ouverte et fermée.

10. Vanne selon l'une quelconque des revendications précédentes dans laquelle l'intérieur du corps de vanne (1) ou en correspondance des ouvertures d'entrée et de sortie du corps de vanne (1a, 1b), la vanne (100) comprend un premier et un second anneaux d'étanchéité respectifs (4), espacés axialement l'un de l'autre et définissant chacun une assise d'étanchéité respective (4a) recevant la surface de l'obturateur, le premier et le second anneaux d'étanchéité (4) définissant la position axiale de l'obturateur (3) par rapport au corps de vanne (1).

11. Vanne selon la revendication 10 dans laquelle le premier et le second anneaux d'étanchéité respectifs (4) sont localisés respectivement au niveau des ouvertures d'entrée et de sortie du corps de vanne (1a, 1b), et où chacune des deux collerettes opposées (2) est couplée au corps de vanne à l'une respective de ladite ouverture d'entrée ou de sortie (1a, 1b) et se trouve en butée contre une surface exposée avant de chaque anneau d'étanchéité (4),
lesdites collerettes contenant axialement le corps de vanne (1) et bloquant axialement lesdits anneaux d'étanchéité (4) au corps de vanne (1).

12. Procédé de fabrication d'une vanne (100) selon l'une quelconque des revendications précédentes, le procédé comprenant les étapes suivantes :
- de préparation du corps de vanne (1),
- de positionnement de l'obturateur (3) à l'intérieur du corps de vanne (1),
- d'association des deux collerettes (2) aux côtés axialement opposés respectifs du corps de vanne en correspondance desdites ouvertures d'entrée et de sortie (1a et 1b),
- d'insertion des éléments de raccordement (7) dans les trous traversants dans les collerettes (2),
- de formation d'un ou des deux colliers (7a) et de blocage axialement des deux collerettes (2) contre le corps de vanne (1).

13. Procédé selon la revendication 12, dans lequel l'un ou les deux desdits colliers (7a) dans chaque élément de raccordement sont formés, par déformation mécanique des parties terminales des éléments de raccordement, après l'insertion de l'élément de raccordement (7) dans les deux trous traversants correspondants (8) des collerettes opposées ;
où l'insertion des éléments de raccordement (7) et/ou la formation des colliers (7a) a lieu tout en maintenant les éléments de raccordement à une température supérieure à 100°C, plus facultativement supérieure à 300°C, même plus facultativement supérieure à 600°C, et où après la formation d'un ou des deux dits colliers, une étape de refroidissement a lieu entraînant la contraction axiale de l'élément de raccordement.

14. Procédé selon l'une quelconque des revendications 12 ou 13, dans lequel le positionnement de l'obturateur (3) comprend :
- l'insertion de l'obturateur (3) dans le corps de vanne (1), et
- la localisation du premier et du second anneaux d'étanchéité respectifs (4) respectivement au niveau des ouvertures d'entrée et de sortie du corps de vanne (1a, 1b),
où chacune des deux collerettes opposées (2) est couplée au corps de vanne au niveau de l'une respective de ladite ouverture d'entrée ou de sortie (1a, 1b) et vient en butée contre une surface exposée avant de chaque anneau d'étanchéité (4), lesdites collerettes contenant axialement le corps de vanne (1) et bloquant axialement lesdits anneaux d'étanchéité (4) au corps de vanne (1).

15. Ensemble canalisation comprenant :
- une première canalisation (101) présentant une collerette terminale (103) prévue avec de nombreuses ouvertures traversantes,
- une seconde canalisation (102) présentant une collerette terminale (104),
- une vanne (100) selon l'une quelconque des revendications précédentes de 1 à 11 ou
une vanne fabriquée en utilisant le procédé selon l'une quelconque des revendications 12 à 14, où la vanne (100) est insérée entre ladite première collerette terminale de canalisation (103) et ladite seconde collerette terminale de canalisation (104),
- des attaches (105) présentant des tiges respectives insérées *via* les trous traversants dans chacune des deux collerettes (2) de la vanne (100) et à travers les ouvertures correspondantes (105, 106) dans les collerettes terminales de canalisation (102, 104), lesdites tiges d'attache passant à travers les passages axiaux (7') des éléments de raccordement (7), lesdites attaches présentant un moyen de fixation pour bloquer les collerettes (103, 104) contre les collerettes (2), éventuellement où chacune desdites attaches comprend un boulon ayant une partie filetée mâle conçue pour le couplage avec une partie filetée femelle correspondante présente sur un écrou respectif couplé à la tige du boulon.
